(19) Europäisches Patentamt

European Patent Office

Office européen des brevets

(11) EP 3 051 670 B1

(12) **EUROPEAN PATENT SPECIFICATION**

(45) Date of publication and mention
of the grant of the patent:
**22.08.2018 Bulletin 2018/34**

(21) Application number: **15152853.6**

(22) Date of filing: **28.01.2015**

(51) Int Cl.:
*H02K 3/28* (2006.01)     *H02M 5/458* (2006.01)
*H02M 7/493* (2007.01)    *H02K 7/18* (2006.01)
*H02K 11/04* (2016.01)    *H02P 9/00* (2006.01)
*H02P 25/22* (2006.01)    *H02P 27/06* (2006.01)
*H02M 5/14* (2006.01)

(54) **Winding design for a stator of an electric machine**

Wicklungsaufbau für einen Stator einer elektrischen Maschine

Conception d'enroulement pour le stator d'une machine électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.08.2016 Bulletin 2016/31**

(73) Proprietor: **Siemens Aktiengesellschaft
80333 München (DE)**

(72) Inventors:
• **Thomas, Arwyn**
**Cheshire, SK8 6HW (GB)**
• **Xia, Zhen Ping**
**Sheffield, S10 5TR (GB)**

(56) References cited:
EP-A1- 2 670 027          EP-A1- 2 685 616
WO-A1-2008/119864     DE-A1-102006 021 354
FR-A1- 2 967 529          GB-A- 1 107 704
US-A1- 2001 006 292

**Description**

Field of invention

The present invention relates to the field of an electric machine comprising a stator arrangement having a plurality of electric windings and a rotor arrangement being rotatable around a center axis of the stator arrangement. In particular, the present invention relates to a special topology or design of the plurality of windings which contributes to a reduction of eddy currents flowing within the rotor arrangement.

Art Background

Fractional Slot Concentrated Winding (FSCW) is a known approach for spatially arranging and electrically connecting a plurality of stator windings of an electric machine which can be a motor or a generator. In a FSCW design, different windings respectively end windings are arranged along a circumference of the stator in an non-overlapping manner. The end windings, which are wound around the stator teeth, can be kept short. This allows on the one hand for achieving a high efficiency and on the other hand for low manufacturing costs. Further, a FSCW machine having a rotor with permanent magnets (PM) exhibits a sinusoidal back electro motive force (emf) waveform and a low cogging torque. In a known manner cogging torque results from the magnetic interaction between the PM of the rotor and the stator slots accommodating the windings.

FSCW machines may be built up with two different winding topologies.

(A) In a first "even" winding topology an even number of windings are connected in series for one and the same electric phase. The so called winding factor can be maximized if the following equation (I) is fulfilled:

$$\text{Ns} \ / \ 3|\text{p-Ns}| \ = \ \text{even} \qquad\qquad (\text{I})$$

Thereby, p is the number of the poles and Ns is the number of slots of the respective stator.
(B) In a second "odd" winding topology an uneven number of windings are connected in series for one and the same electric phase. Here, the winding factor can be maximized if the following equation (II) is fulfilled:

$$\text{Ns} \ / \ 3|\text{p-Ns}| \ = \ \text{odd} \qquad\qquad (\text{II})$$

However, the winding connections of these two known FSCW winding topologies have some drawbacks. Specifically, lower order sub-harmonics of the magnetic field may be present within the airgap. The comparatively long wavelengths of these lower order sub-harmonics will penetrate into the rotor inducing eddy current losses in particular within the rotor PM and within a rotor iron yoke. Further, in particular in large electric machines, a solid back iron yoke is normally required for the sake of providing a sufficient mechanical strength of rotor. Therefore, even higher eddy currents losses will be produced within such a solid back iron yoke.

As way of an example, around 40kW of eddy current loss could potentially be generated for a 3MW level generator. This will not only significantly reduce the generator efficiency but also cause rotor heating problems. In addition, lower order spatial harmonics will also increase the generator noise and vibration levels.

FR 2 967 529 A1 discloses an electric machine comprising a single-tooth winding with grouped phases. There is shown a stator with teeth, which are separated by slots in which slots wire coils are housed around the teeth. Thereby, some phase groups are of the same phase, even though shifted by 30°. The windings are connected to a rectifier. Hereby, one phase group is connected to a first rectifier and another phase group is connected to a second rectifier. The two rectifiers are connected in series (a) or in parallel (b) with each other. It is further shown that two rectifiers may be connected together, wherein the arrangement of both rectifiers is connected to a single and common DC link.

US 2001/0006292 A1 discloses a starter generator for an internal combustion engine serving as a starter motor. The starter generator comprises an outer magnet rotor and a stator having a plurality of coils, which are wound around stator teeth. There is a parallel configuration of windings each connected to a respective switch circuit. The switch circuits are arranged to switch a current flowing through the coils and a switch controller is for controlling switch elements of the switch circuits. Hereby, the current flows through all the coils by controlling the switch circuits in accordance with a position of the rotor (see abstract).

EP 2 685 616 A1 discloses a stator arrangement and an electrical generator. There is shown a stator extending in a circumferential direction and having a plurality of teeth alternating with a plurality of slots arranged along the circumferential direction. A first wire is arranged in a first slot of the plurality of slots and a second wire is arranged in a second slot of the plurality of slots, wherein the second slot is circumferentially adjacent to the first slot. Furthermore, disclosed is a first converter having an input terminal connected to the first wire and a second converter having an input terminal connected to the second wire.

WO 2008/119864 A1 discloses a wind turbine generator with independent windings. The generator comprises a converter system, which is used to couple a generator of a wind turbine to a network, and which comprises NI converter modules connected in parallel.

EP 2 670 027 A1 discloses a method and a system for controlling a generator comprising a rotor with plural magnets and at least a first stator winding and a second stator winding, which is electrically separated from the first stator winding. The generator may be connected with two separated converters, each comprising an AC/DC converter, a DC link, and a DC/AC converter. One section of the generator connects windings of three phases to the first converter and another section of the generator connects other windings of three phases to the second converter.

DE 10 2006 021 354 A1 discloses a synchronous motor with redundant stator windings. Windings are arranged in slots of a generator. Three phases of the synchronous motor are connected to a converter.

GB 1,107,704 discloses that windings of an electrical generator can be connected with a star or triangle conjunction.

There may be a need for providing a winding topology for an electric machine which exhibits only small eddy current losses.

Summary of the Invention

This need may be met by the subject matter according to the independent claim. Advantageous embodiments of the present invention are described by the dependent claims.

According to an aspect of the invention there is provided an electric power system comprising a fractional slot concentrated winding generator for a wind turbine. The (fractional slot concentrated winding) generator comprises a stator arrangement which itself comprises (a) a frame structure which is formed around a center axis; (b) a plurality of stator teeth which are arranged equally spaced apart along a circumference of the frame structure, wherein each stator tooth extends in a radial direction with respect to the center axis; (c) a plurality of electric windings, each electric winding being wound around one stator tooth; and (d) an electric interface for connecting the plurality of electric windings with a power converter system. Each electric winding is assigned to one electric phase of a multi-phase current which is associated with an operation of the generator. Further, the electric interface is configured in such a manner that two neighboring electric windings being assigned to one and the same electric phase are connected in parallel with the power converter system. Further, the generator comprises a rotor arrangement being rotatable around the center axis of the stator arrangement, wherein the rotor arrangement comprises permanent magnets. The power converter system is connected to the electric windings of the stator arrangement. The power converter system comprises a first power converter and a second power converter each having an AC-DC converter bridge, a DC-AC converter bridge and a DC link being connected in between the AC-DC converter bridge and the DC-AC converter bridge. In accordance with the invention a first electric winding is connected to the first power converter and a neighboring second electric winding is connected to the second power converter. Further, the two neighboring electric windings are assigned to one and the same electric phase.

The described electric power system is based on the idea that by connecting two separate electric windings being assigned to the same electric phase of a multi-phase current not in a serial but in a parallel manner to a power converter system a significant reduction of not completely avoidable eddy currents can be achieved, which are induced in electric conductive parts of the rotor arrangement. Specifically, such eddy currents are induced in permanent magnets (PM) of the rotor arrangement and/or in a solid back yoke which is typically used in a rotor arrangement of a high power or large electric machine. Reducing the strength of such eddy currents may result in a significant reduction of a noise and/or vibration level of the respective electric machine which comprises the described stator assembly. As a consequence, in particular based on an improved thermal performance the overall efficiency of the electric machine will be improved.

The frame structure may be in particular a stator yoke.

The described topology, configuration, layout or design of the plurality of windings may further provide the advantage that the amplitude for the lowest possible vibration mode can be significantly reduced. As a consequence the noise and vibration level of a respective electric machine will be lowered.

Furthermore, with the described winding design the portion of electric power being assigned to sub-harmonics will be reduced. Therefore, the strength of unwanted torque ripples can be reduced and, as a consequence, the noise and the vibration level of the respective electric machine in operation will be further reduced.

The multi-phase current being associated with the operation of the mentioned electric machine may be in particular a three-phase current. This may provide the advantage that the described stator arrangement can be used for the most typical and widely spread type of electric machines. However, the described winding design can also be extended to electric applications having a higher number of phases.

The power converter system may comprise at least two half-rated power converters. In case of two windings or winding groups being connected in parallel with the power converter system a first winding or a first winding group may be connected to the first power converter and the second winding or the second winding group may be connected to the second power converter. In such a topology different windings or different winding groups all being assigned to the same electric phase of the multi-phase current are connected in parallel to the power converter system.

It is mentioned that in this respect it is obvious that the described concept of connecting two different windings or winding groups of one electric phase in parallel to the power converter system can be extended to a higher number of different windings or winding groups. In this case the number of power converters comprised by the power converter system must be increased accordingly. Specifically, the number of different windings or winding groups being assigned to one electric phase must be the same as the number of power converters comprised by the power converter system.

The term "associated with an operation of the electric machine" may particularly mean that in case the electric machine is a generator the respective multi-phase current is the current being produced by the generator when converting mechanical power into electric power. Accordingly, when the electric machine is a motor the respective multi-phase current is the current being necessary to drive the motor in order to convert electric power into mechanical power.

The (at least) two different electric windings being connected in series may be operated in a parallel manner by connecting or coupling them in a proper manner with a proper power converter system. With such a configuration a particular small level of noise and vibrations can be achieved. Further, due to small eddy currents being induced within the rotor arrangement, a high degree of efficiency can be realized. The two different electric windings being assigned to one and the same electric phase may be operated in a parallel manner by connecting or coupling a first electric winding exclusively to the first power converter and the second electric winding exclusively to the second power converter.

In this respect it is pointed out that in some embodiments the electric power system may comprise at least one further and in particular a third power converter. This may allow for connecting three different neighboring electric windings being assigned to one and the same electric phase in parallel with a power converter system comprising the first power converter, the second power converter, and the third power converter.

The proposed dual 3-phase winding connection or the n x 3-phase winding connection may reduce the required amperage because the winding distribution factor is increased. This may further improve the efficiency of the electric machine.

According to an embodiment of the invention (a) the phase of a sum of the magneto motive forces associated with the windings being wound around one stator tooth is different from (b) the phase of a sum of the magneto motive forces associated with the windings being wound around another stator tooth.

In particular, the phase of (a) a sum of the magneto motive forces associated with the windings being wound around one stator tooth may be different to (b) the phase of a sum of the magneto motive forces associated with the windings being wound around each other (single) stator tooth.

By spreading the phases of the overall magneto motive force being associated with each stator tooth the above described advantageous effects of reduced torque ripples, , reduced strength of harmonics, reduced mechanical vibrations, reduced eddy currents within the rotor arrangement, and/or improved efficiency of the electric machine can be achieved to an even higher extend.

According to a further embodiment of the invention an even number of neighboring electric windings are assigned to one electric phase. This may provide the advantage that the described winding design can be used for known and widely used electric machines and in particular for known Fractional Slot Concentrated Winding (FSCW) machines. Apart from reconfiguring the electric interface there is in a beneficial manner typically no need to accomplish further structural changes in order to convert a known stator arrangement into a stator arrangement according to an embodiment of the invention.

According to a further embodiment of the invention the even number is two. This may provide the advantage that the stator arrangement and in particular the electric interface can be realized in an extremely simple manner.

As has already been mentioned above, the number of power converters which may be comprised by the power converter system must be more than one in order to allow that the two neighboring electric windings being assigned to one and the same electric phase can be operated in parallel.

According to a further embodiment of the invention the even number is four.

By contrast to the embodiment described above where the even number is two the more sophisticated winding design wherein that even number is four may require an electric interface which is little bit more complex. However, the small disadvantage being related to this slightly increased complexity may be overcompensated by the matter of fact that the above described advantageous effects (e.g. reduced mechanical vibrations and improved efficiency) may be further increased.

The stator arrangement according to this embodiment may be realized in particular with two appropriate winding configurations. Specifically, in a first winding configuration (a) each one of the four neighboring electric windings is connected, with respect to the other ones of the four neighboring electric windings, in parallel to the power converter system. This may mean that the number of power converters which may be comprised by the power converter system, which allow for a parallel operation of the individual four windings, is also four. In a second appropriate winding configuration (b) the four windings being assigned to one and the same electric phase are subdivided into winding groups, wherein the respectively two windings of one winding group are connected in series. This means that not all four individual windings but the two winding groups are operated in parallel. As a consequence, a power converter system being used with this second winding configuration may comprise two individual power converters.

According to a further embodiment of the invention an odd number of neighboring electric windings are assigned to one electric phase. This may provide the advantage that the described winding design can also be applied to known and widely used electric machines having an odd number of neighboring electric windings being assigned to one and the same electric phase of a multi-phase and in particular of a three-phase electric current. Since such winding configurations are in particular suitable and common for known FSCW machines this embodiment may be applied to many types of electric machines in order to realize the above mentioned advantageous effects of e.g. reduced mechanical vibrations and/or improved efficiency.

According to a further embodiment of the invention the odd number is three. This may provide the advantage that the stator arrangement and in particular the electric interface of the stator arrangement can be realized in a simple manner.

Specifically, in an appropriate winding configuration each one of the three neighboring electric windings are solely connected with respectively one power converter. This means that the number of power converters comprised by the power converter system, which allow for parallel operation of the three windings, is also three.

Descriptive speaking, the above described embodiments having a dual 3-phase winding connection or an n x 3-phase winding connection are operated with a 2 half rated or an n 1/n rated power converter system. All these embodiments may yield the advantage of smaller power converter sizes and potentially lower power converter losses. Further, the proposed dual 3-phase winding connection or the n x 3-phase winding connection may reduce the required amperage because the winding distribution factor is increased. This may further improve the efficiency of the electric machine.

According to a further embodiment of the invention the plurality of stator teeth comprises at least one stator tooth which is associated with two electric windings being assigned to different electric phases of the multi-phase current.

Descriptive speaking, two electric windings which belong to different electric phases may be wound around one stator tooth. In other words, the electric windings being assigned to different electric phases are distributed along the circumference of the frame structure in such a manner that they overlap partially at one stator tooth. Also this winding design may provide the advantage that a significant reduction of the sub-harmonics, rotor eddy current losses, noise and the vibration level when the stator arrangement is in operation, can be expected.

According to a further embodiment of the invention the total number of turns of the electric windings being assigned to different stator teeth is the same. In other words, the two electric windings being assigned to two different electric phases and being wound or mounted around one stator tooth have together the same number of turns as another winding which is the only winding being mounted around another the stator tooth.

Using the same number of terms of electric winding(s) for different stator teeth may provide the advantage that the noise and the vibration level of the operating stator arrangement can be kept small. Preferably, the two electric windings being mounted around one stator tooth have the same number of turns which is half the number of an electric winding being the only winding of one stator tooth.

According to a further embodiment of the invention the rotor arrangement is located outside from the stator arrangement. This means that the electric machine described with this embodiment has a topology with an external rotor arrangement. Since (a) such a topology is currently preferred in particular for a generator of a high power wind turbine and (b) the technical field of wind power becomes more and more important, the electric machine described with this embodiment can be widely used. However, in this respect it is mentioned that the electric machine described in this document can also be realized with an internal rotor topology.

According to a further embodiment of the invention the power converter system comprises (a) one power converter having an AC-DC converter bridge, a DC-AC converter bridge and a DC link being connected in between the AC-DC converter bridge and the DC-AC converter bridge and (b) a three-way transformer connected between the power converter and the electric windings of the stator arrangement.

It has to be noted that embodiments of the invention have been described with reference to different subject matters. A person skilled in the art will gather from the above and the following description that, unless other notified, any combination between features relating to different subject matters is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1   shows an electric machine with a stator arrangement having a winding configuration wherein two electric windings for the same electric phase are connectable in parallel to a power converter system.

Figure 2   shows a stator arrangement having a winding configuration wherein respectively four electric windings for the same electric phase are subdivided into two winding groups which are connectable in a parallel manner to a power converter.

Figure 3   shows an electric power system with a power converter system having two half-rated power converters.

Figure 4   shows an electric power system with a power converter system having one full-rated power converter and a three-way transformer.

Figure 5   shows an electric machine with a stator arrangement having a winding configuration wherein three electric windings for the same electric phase are connectable in parallel to a power converter system having three power converters.

Figure 6   shows a stator arrangement having a three-layer winding configuration wherein some teeth are associated with two different windings being assigned to different electric phases.

Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

In the following several winding layouts in accordance with various embodiments of the invention will be elucidated. With these winding layouts problems of conventional winding layouts such as a high noise and vibration level as well as a low efficiency of an electric machine can be reduced significantly.

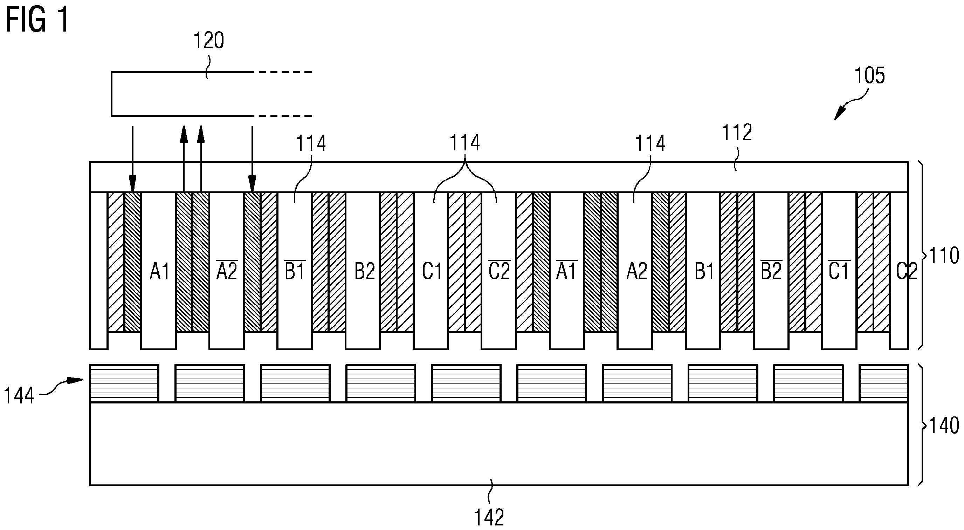

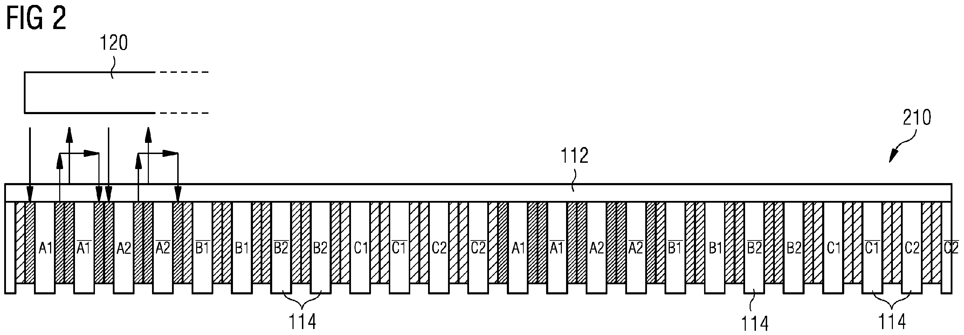

Figure 1 shows an electric machine 105 representing a generator and in particular a generator for a wind turbine. The electric machine 105 comprises a stator arrangement 110 and a rotor arrangement 140. In Figure 1 the generator 105 is depicted in a "rolled out manner". This means that in reality both the stator arrangement 110 and the rotor arrangement 114 have a generally circular respectively cylindrical shape and are rotatable around a rotational axis being oriented perpendicular to the plane of drawing. It is mentioned that a "rolled out" representation is also used for the embodiments shown in Figure 2, Figure 5, and Figure 6.

As can be seen from Figure 1, the rotor arrangement 140 comprises a rotor yoke 142 as well as a plurality of permanent magnets 144, which are mounted to the rotor yoke 142. The stator arrangement 110 comprises a frame structure 112 having a plurality of stator teeth 114 which in a known manner represent mechanical structures around which electric windings can be wound. In Figure 1 electric windings being assigned to the first phase of a three-phase current being generated by the generator 105 are denominated with reference numerals A1 and A2. Accordingly, electric windings being assigned to the second phase of the three-phase current are denominated with reference numerals B1 and B2 and electric windings being assigned to the third phase of the three-phase current are denominated with reference numerals C1 and C2.

The electric machine 105 further comprises an electric interface 120 which is configured in such a manner that the respectively two neighboring electric windings being assigned to one and the same electric phase can be connected in parallel to a non-depicted power converter system. Such a power converter system is used in a known manner in order to convert the AC current produced by the generator 105 firstly into a DC current and secondly into an AC current with a desired frequency.

The bold arrows shown in Figure 1 below the electric interface 120 indicate that with respect to the connection between the first winding A1 and the power converter system the electric interface 120 connects the second winding A2 in an antiparallel manner to the power converter system.

Descriptive speaking, in the stator arrangement 110 the same phase windings are split into two in order to form a kind of dual 3-phase windings. Because there is an electrically 30° shift between them, the lowest sub-harmonics and some higher harmonics which are typically included to a large extend in the generated three-phase current are almost completely removed. As a result an eddy current loss in the rotor magnets 144 and rotor yoke 142 is also almost reduced to zero and the efficiency of the generator 105 is increased.

Figure 2 shows a stator arrangement 210 having a winding configuration wherein respectively four electric windings for the same electric phase are subdivided into two winding groups which are connected, via the electric interface 120, in a parallel manner to a non-depicted power converter system. The electric windings belonging to one winding group are connected in series in an antiparallel manner with respect to their polarity. This is indicated in Figure 2 by means of the bold arrows as well as by the overbar of the numeral of the respective electric winding.

As can be seen from the representation of Figure 2, a first winding group being assigned to the first electric phase of the generated three-phase current is denominated with reference numerals A1 and $\overline{A1}$. The second winding group for the first phase is denominated with reference numerals A2 and $\overline{A2}$. The winding groups being assigned to the other electric phases are denominated with corresponding reference numerals.

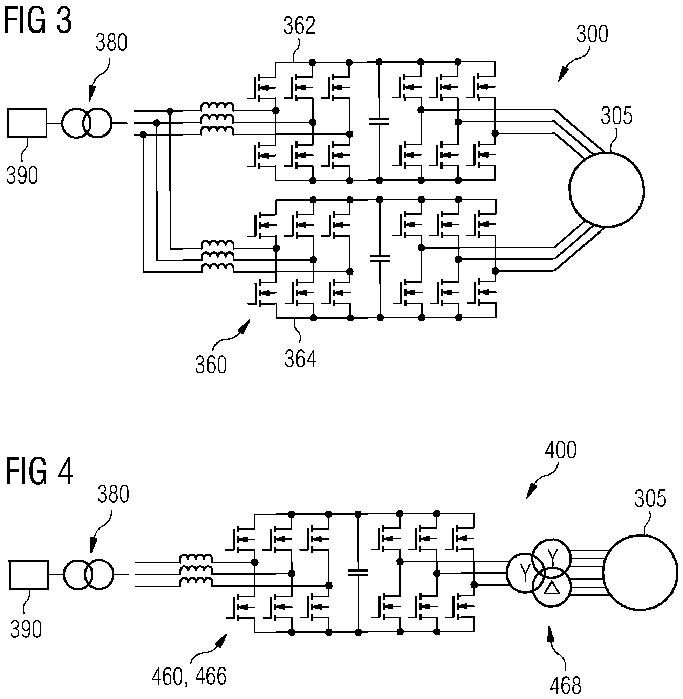

Figure 3 shows an electric power system 300 with a generator 305 and a power converter system 360 having two half-rated power converters 362 and 364. In accordance with the basic principle of the invention described in this document and according to the embodiment described here the generator is a dual three-phase FSCW generator 305. As can be seen from Figure 3, the electric power system 300 further comprises a step-up transformer 380 which in a known manner is used to connect the power converter system 360 with an external utility grid 390 to which the generated electric power is delivered.

Descriptive speaking, the dual 3-phase windings of the dual three-phase FSCW generator 305 can be driven by two half rated power converters 362 and 364. Each one of the power converters 362 and 364 can be controlled in a conventional manner, except that there will be 30-degree shift in the electrical angles between the power converters 362 and 364. This 30-degree shift is a requirement resulting from the winding design of the dual three-phase FSCW generator 305.

Figure 4 shows an electric power system 400 with a power converter system 460 having one full-rated power converter 466 and a three-way transformer 468. According to the embodiment described here the three-way transformer 468 is configured as a Y-Y/Δ connection with the corresponding design of winding number of turns within the dual three-phase FSCW generator 305. Again, the supply to the two channels of the generator 305 will have an electric 30-degree shift. In addition, in this case the winding distribution factor can be increased and the efficiency of the generator 305 will be further improved.

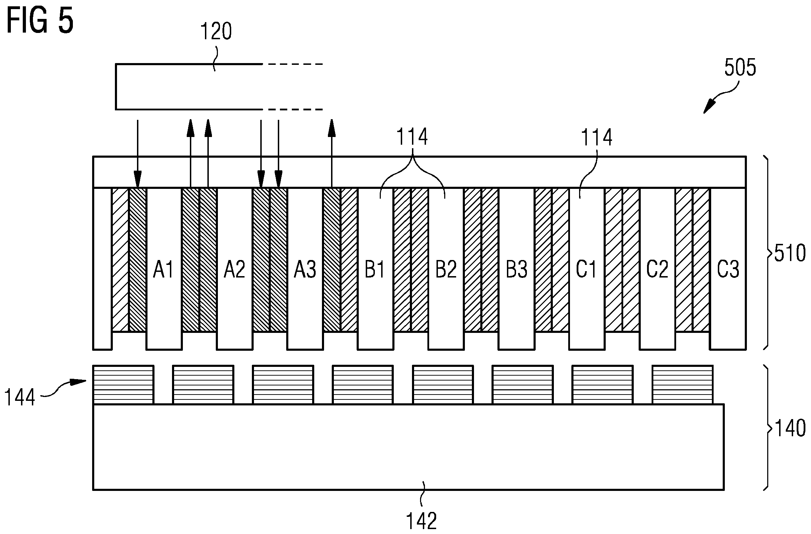

The multi power converter arrangement shown in Figure 3 can be extended to an n integer number of 3-phase power converters to control the separate winding configurations. This would result in the possibility of using Ns / 3|p-Ns| = odd fractional slot generators in order to increase the winding factor and also to further reduce the eddy current losses within the rotor arrangement. This is illustrated by the generator 505 with the stator arrangement 510 depicted in Figure 5. Here, the three windings being assigned to the first phase are denominated with reference numeral A1, A2, A3, the three windings being assigned to the second phase are denominated with reference numeral B1, B2, B3, and the three windings assigned to third phase are denominated with reference numeral C1, C2, C3. The "antiparallel polarity configuration" between two neighboring windings is indicated with the bold arrows. They will connect to a 3 power converter system respectively.

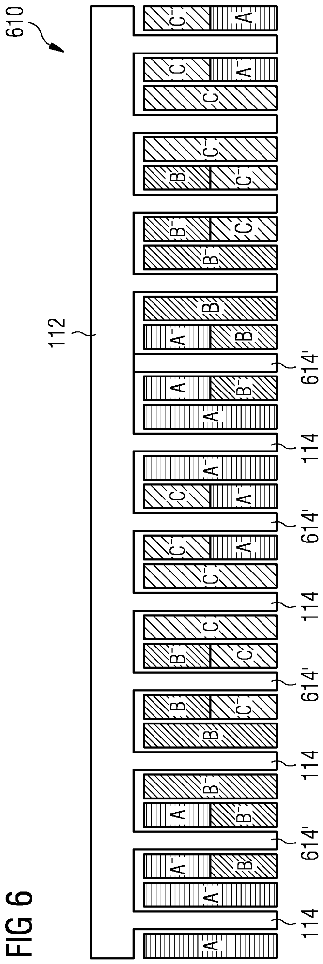

Figure 6 shows a stator arrangement 610 having a three-layer winding configuration. This means that the same phase windings are spread to three adjacent teeth 114, 614'. Thereby, a middle stator tooth 114 has a winding with a normal number of turns, whilst two side windings being mounted to the two neighboring stator teeth 614' only have half of the normal number of turns. An "antiparallel polarity" of the electric connection of neighboring windings being assigned to the same electric phase is indicated with A, A-, B, B- respectively C, C-, which numerals are indicative for the location of the terminals or the respective electric winding.

It is mentioned that also in this embodiment the sub-harmonic current components of the generated three-phase current will be substantially reduced. As a result, the eddy current loss in particular in the rotor yoke is also significantly reduced. Consequently, also the noise and vibration levels are expected to be reduced.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### Claims

1. An electric power system (300, 400) comprising a fractional slot concentrated winding generator (105, 305, 505) for a wind turbine, the generator (105, 305, 505) comprising
   a stator arrangement (110, 210, 510) comprising

a frame structure (112) which is formed around a center axis;

a plurality of stator teeth (114) which are arranged equally spaced apart along a circumference of the frame structure (112), wherein each stator tooth (114) extends in a radial direction with respect to the center axis;

a plurality of electric windings, each electric winding being wound around one stator tooth (114); and

an electric interface (120) for connecting the plurality of electric windings with a power converter system (360, 460); wherein

each electric winding is assigned to one electric phase of a multi-phase current which is associated with an operation of the generator (105, 305, 505), and

the electric interface (120) is configured in such a manner that two neighboring electric windings being assigned to one and the same electric phase are connected in parallel with the power converter system (360, 460); and

a rotor arrangement (140) being rotatable around the center axis of the stator arrangement (110, 210, 510), wherein the rotor arrangement (110, 210, 510) comprises permanent magnets;

wherein the power converter system (360, 460) is connected to the electric windings of the stator arrangement (110, 210, 510),

wherein the power converter system (360) comprises a first power converter (362) and a second power converter (364), and wherein a first electric winding is connected to the first power converter (362) and a neighboring second electric winding is connected to the second power converter (364),

wherein the two neighboring electric windings are assigned to one and the same electric phase, **characterized in that** each power converter (362, 364) comprises an AC-DC converter bridge, a DC-AC converter bridge and a DC link being connected in between the AC-DC converter bridge and the DC-AC converter bridge.

**2.** The electric power system (300, 400) as set forth in the preceding claim, wherein

(a) the phase of a sum of the magneto motive forces associated with the windings being wound around one stator tooth (114) is different from

(b) the phase of a sum of the magneto motive forces associated with the windings being wound around another stator tooth (114).

**3.** The electric power system (300, 400) as set forth in any one of the preceding claims 1 to 2, wherein an even number of neighboring electric windings are assigned to one electric phase.

**4.** The electric power system (300, 400) as set forth in claim 3, wherein the even number is two.

**5.** The electric power system (300, 400) as set forth in claim 3, wherein the even number is four.

**6.** The electric power system (300, 400) as set forth in any one of the preceding claims 1 to 2, wherein an odd number of neighboring electric windings are assigned to one electric phase.

**7.** The electric power system (300, 400) as set forth in claim 6, wherein the odd number is three.

**8.** The electric power system (300, 400) as set forth in any one of the preceding claims, wherein the plurality of stator teeth (114) comprises at least one stator tooth (114) which is associated with two electric windings being assigned to different electric phases of the multi-phase current.

**9.** The electric power system (300, 400) as set forth in the preceding claim, wherein the total number of turns of the electric windings being assigned to different stator teeth (114, 614') is the same.

**10.** The electric power system (300, 400) as set forth in the preceding claims, wherein the rotor arrangement (140) is located outside from the stator arrangement (110, 210, 510).

**Patentansprüche**

**1.** Elektrisches Stromversorgungssystem (300, 400), umfassend einen FSCW-Generator (fractional slot concentrated winding) (105, 305, 505) für eine Windkraftanlage, wobei der Generator (105, 305, 505) Folgendes umfasst: eine Statoranordnung (110, 210, 510) umfassend

eine Rahmenstruktur (112), die um eine Mittelachse gebildet ist;

eine Vielzahl von Statorzähnen (114), die in gleichmäßigem Abstand zueinander entlang eines Umfangs der Rahmenstruktur (112) angeordnet sind, wobei sich jeder Statorzahn (114) in radialer Richtung in Bezug auf die Mittelachse erstreckt;

eine Vielzahl von elektrischen Wicklungen, wobei jede elektrische Wicklung um einen Statorzahn (114) gewickelt ist; und

eine elektrische Schnittstelle (120) zum Verbinden der Vielzahl von elektrischen Wicklungen mit einem Stromrichtersystem (360, 460); wobei

jede elektrische Wicklung einer elektrische Phase eines Mehrphasenstroms zugewiesen ist, der einem Betrieb des Generators (105, 305, 505) zugehörig ist, und

die elektrische Schnittstelle (120) in einer solchen Weise konfiguriert ist, dass zwei benachbarte elektrische Wicklungen, die ein und derselben elektrischen Phase zugewiesen sind, mit dem Stromrichtersystem (360, 460) parallelgeschaltet sind; und

eine Rotoranordnung (140), die um die Mittelachse der Statoranordnung (110, 210, 510) drehbar ist, wobei die Rotoranordnung (110, 210, 510) Dauermagneten umfasst;

wobei das Stromrichtersystem (360, 460) mit den elektrischen Wicklungen der Statoranordnung (110, 210, 510) verbunden ist, wobei das Stromrichtersystem (360) einen ersten Stromrichter (362) und einen zweiten Stromrichter (364) umfasst, und wobei eine erste elektrische Wicklung mit dem ersten Stromrichter (362) verbunden ist und eine benachbarte zweite elektrische Wicklung mit dem zweiten Stromrichter (364) verbunden ist, wobei die beiden benachbarten elektrischen Wicklungen ein und derselben elektrischen Phase zugewiesen sind, **dadurch gekennzeichnet, dass** jeder Stromrichter (362, 364) eine AC-DC-Umrichterbrücke, eine DC-AC-Umrichterbrücke und einen DC-Link zwischen der AC-DC-Umrichterbrücke und der DC-AC-Umrichterbrücke umfasst.

2. Elektrisches Stromversorgungssystem (300, 400) nach dem vorhergehenden Anspruch, wobei

(a) sich die Phase einer Summe der zu den um einen Statorzahn (114) gewickelten Wicklungen gehörigen magnetomotorischen Kräfte unterscheidet von

(b) der Phase einer Summe der zu den um einen anderen Statorzahn (114) gewickelten Wicklungen gehörigen magnetomotorischen Kräfte.

3. Elektrisches Stromversorgungssystem (300, 400) nach einem der vorhergehenden Ansprüche 1 bis 2, wobei eine gerade Anzahl von benachbarten elektrischen Wicklungen einer elektrischen Phase zugewiesen ist.

4. Elektrisches Stromversorgungssystem (300, 400) nach Anspruch 3, wobei die gerade Zahl zwei ist.

5. Elektrisches Stromversorgungssystem (300, 400) nach Anspruch 3, wobei die gerade Zahl vier ist.

6. Elektrisches Stromversorgungssystem (300, 400) nach einem der vorhergehenden Ansprüche 1 bis 2, wobei eine ungerade Anzahl von benachbarten elektrischen Wicklungen einer elektrischen Phase zugewiesen ist.

7. Elektrisches Stromversorgungssystem (300, 400) nach Anspruch 6, wobei die ungerade Zahl drei ist.

8. Elektrisches Stromversorgungssystem (300, 400) nach einem der vorhergehenden Ansprüche, wobei die Vielzahl von Statorzähnen (114) mindestens einen Statorzahn (114) umfasst, der zwei elektrischen Wicklungen zugehörig ist, welche verschiedenen elektrischen Phasen des Mehrphasenstroms zugewiesen sind.

9. Elektrisches Stromversorgungssystem (300, 400) nach dem vorhergehenden Anspruch, wobei die Gesamtzahl der Windungen der elektrischen Wicklungen, die verschiedenen Statorzähnen (114, 614') zugewiesen sind, die gleiche ist.

10. Elektrisches Stromversorgungssystem (300, 400) nach den vorhergehenden Ansprüchen, wobei

sich die Rotoranordnung (140) außerhalb der Statoranordnung (110, 210, 510) befindet.

**Revendications**

1. Système d'alimentation électrique (300, 400) comprenant un générateur à enroulements concentrés à nombre fractionnaire d'encoches (105, 305, 505) pour une éolienne, le générateur (105, 305, 505) comprenant

   un agencement de stator (110, 210, 510) comprenant une structure de châssis (112) qui est formée autour d'un axe central ;

   une pluralité de dents de stator (114) qui sont agencées espacées de manière équidistante le long d'une circonférence de la structure de châssis (112), dans lequel chaque dent de stator (114) s'étend dans une direction radiale par rapport à l'axe central ;

   une pluralité d'enroulements électriques, chaque enroulement électrique étant enroulé autour d'une dent de stator (114) ; et

   une interface électrique (120) destinée à raccorder la pluralité d'enroulements électriques à un système de convertisseur de puissance (360, 460) ; dans lequel

   chaque enroulement électrique est affecté à une phase électrique d'un courant multiphasé qui est associé à un fonctionnement du générateur (105, 305, 505), et

   l'interface électrique (120) est configurée de telle manière que deux enroulements électriques voisins qui sont affectés à une seule et même phase électrique sont raccordés en parallèle au système de conversion de puissance (360, 460) ; et

   un agencement de rotor (140) qui est apte à effectuer des rotations autour de l'axe central de l'agencement de stator (110, 210, 510), dans lequel l'agencement de rotor (110, 210, 510) comprend des aimants permanents ;

   dans lequel le système de conversion de puissance (360, 460) est raccordé aux enroulements électriques de l'agencement de stator (110, 210, 510),

   dans lequel le système de convertisseur de puissance (360) comprend un premier convertisseur de puissance (362) et un deuxième convertisseur de puissance (364), et

   dans lequel un premier enroulement électrique est raccordé au premier convertisseur de puissance (362) et un deuxième enroulement électrique voisin est raccordé au deuxième convertisseur de puissance (364),

   dans lequel les deux enroulements électriques voisins sont affectés à une seule et même phase électrique, **caractérisé en ce que** chaque convertisseur de puissance (362, 364) comprend un pont de conversion CA-CC, un pont de conversion CC-CA et une liaison CC qui est raccordée entre le pont de conversion CA-CC et le pont de conversion CC-CA.

2. Système d'alimentation électrique (300, 400) selon la revendication précédente, dans lequel

   a) la phase d'une somme des forces magnétomotrices associées aux enroulements qui sont enroulés autour d'une dent de stator (114) est différente de
   b) la phase d'une somme des forces magnétomotrices associées aux enroulements qui sont enroulés autour d'une autre dent de stator (114).

3. Système d'alimentation électrique (300, 400) selon l'une quelconque des revendications précédentes 1 à 2, dans lequel un nombre pair d'enroulements électriques voisins est affecté à une phase électrique.

4. Système d'alimentation électrique (300, 400) selon la revendication 3, dans lequel le nombre pair est de deux.

5. Système d'alimentation électrique (300, 400) selon la revendication 3, dans lequel le nombre pair est de quatre.

6. Système d'alimentation électrique (300, 400) selon l'une quelconque des revendications précédentes 1 à 2, dans lequel un nombre impair d'enroulements électriques voisins est affecté à une phase électrique.

7. Système d'alimentation électrique (300, 400) selon la revendication 6, dans lequel le nombre impair est de trois.

8. Système d'alimentation électrique (300, 400) selon l'une quelconque des revendications précédentes, dans lequel la pluralité de dents de stator (114) comprennent au moins une dent de stator (114) qui est associée à deux enroulements électriques qui sont affectés à différentes phases électriques du courant multiphasé.

9. Système d'alimentation électrique (300, 400) selon la revendication précédente, dans lequel le nombre total de spires des enroulements électriques qui sont affectés à différentes dents de stator (114, 614') est le même.

10. Système d'alimentation électrique (300, 400) selon les revendications précédentes, dans lequel l'agencement de rotor (140) est situé à l'extérieur de l'agencement de stator (110, 210, 510).

FIG 1

# FIG 2

FIG 3

FIG 4

FIG 5

EP 3 051 670 B1

# FIG 6

EP 3 051 670 B1

## REFERENCES CITED IN THE DESCRIPTION

**Patent documents cited in the description**

- FR 2967529 A1
- US 20010006292 A1
- EP 2685616 A1
- WO 2008119864 A1
- EP 2670027 A1
- DE 102006021354 A1
- GB 1107704 A